Europäisches Patentamt

European Patent Office

Office européen des brevets

(19)

(11) Publication number: **0 120 680**
**B1**

(12)

# EUROPEAN PATENT SPECIFICATION

(45) Date of publication of patent specification: **12.11.86**

(51) Int. Cl.⁴: **C 08 F 220/14, B 32 B 17/10 //
(C08F220/14, 220:12)**

(21) Application number: **84301940.7**

(22) Date of filing: **22.03.84**

(54) Crack propagation resistant acrylic material.

(30) Priority: **23.03.83 US 478135
14.11.83 US 551246**

(43) Date of publication of application:
**03.10.84 Bulletin 84/40**

(45) Publication of the grant of the patent:
**12.11.86 Bulletin 86/46**

(84) Designated Contracting States:
**AT BE CH DE FR GB IT LI LU NL SE**

(56) References cited:
**CH-A- 487 946
DE-A-3 128 985**

(73) Proprietor: **Rohm and Haas Company
Independence Mall West
Philadelphia, Pennsylvania 19105 (US)**

(72) Inventor: **Moore, Thomas Steven
Rt. 2, West Hunt Road
Maryville Tennessee 37801 (US)**
Inventor: **Pennington, Delmas Bryson
Verton Drive
Rt. 4 Powell Tennessee 37849 (US)**

(74) Representative: **Angell, David Whilton et al
Rohm and Haas Company Patent Department
Chesterfield House Bloomsbury Way
London WC1A 2TP (GB)**

Courier Press, Leamington Spa, England.

## Description

This invention concerns crack propagation resistant acrylic material, and more particularly to such material in sheet form comprising copolymer containing a major amount of methyl methacrylate units and a minor amount of lower alkyl ($C_2$—$C_4$) methacrylate units which material can be suitable for selected ballistic glazing applications.

Optically clear, crack propagation resistant plastic sheets have been developed as an alternative to glass for use in a number of applications including furniture and glazing. Ballastic glazing or "bullet-resisting" glazing is a specialized application which requires very high resistance to crack propagation. Ballistic glazing applications include security barriers in banks, offices, and stores, as well as in specialized vehicles, such as armored car windows, for protection against armed robbery.

In order for a material to be commercially accepted as being effective for ballistic glazing applications, the material must qualify as a "bullet-resisting" material by repeatedly passing an industry-wide certification test procedure. This test is administered by an independent, non-profit organization, Underwriter's Laboratories, Inc. (UL). Underwriter's Laboratories publishes a test procedure for ballistic glazing (UL—752). This procedure describes how the tests are conducted, what weapons are used, what qualifies as passing, and the rating assigned to the material passing the test. The UL—752 test for medium power small arms rating (UL—752 MPSA), and for high power small arms rating (UL—752 HPSA) which are referred to in pertinent part herein, is hereby incorporated by reference into this application. Broadly, in order for a plastic sample to become certified according to UL—752 (MPSA) or (HPSA) (small arms) for indoor and outdoor ballistic glazing applications, the material must not allow three things to occur when fired upon: (1) the material must not allow the projectile to penetrate through the material; (2) the material must not spall on the protected side of the test sample, opposite the side which is being fired upon, to the extent that fragments of the material become imbedded into or damage a cardboard indicator positioned at a predetermined distance 45.72 cm (18 inches) from the protected side of the sample; and (3) the firings must not create an opening of sufficient size in the material to permit the insertion therein of the muzzle of the weapon used for the test. Samples for use in indoor applications must pass this test after being subjected to high temperatures, of about 35°C (95°F), and low temperatures of about 12.7°C (55°F). Samples certified for use in outdoor applications must pass this test after being subjected to a high temperature of about 48.8°C (120°F), and low temperatures. The low temperature test requires one side of the material to be subjected to about −31.6°C (−25°F) while the other side is subjected to room temperature 22.2°C (72°F). For plastic sheet this low temperature test (outdoor certification) is the most difficult of the tests to pass, while for laminated glass the high temperature test is the most difficult. In the UL tests, a sample is typically fired upon three times. The shots are spaced 10.16 ± 1.27 cm (4 ± ½ inches) apart, in a triangular pattern, in the approximate center of the test sample.

The impact from the first shot fired at the sample may create a site for crack propagation when the sample is fired upon the second and the third time. Therefore, resistance to crack propagation is a very important criterion, as is repeated testing of the sample under actual test conditions, in determining whether a particular material will pass the UL—752 certification and be effective as a ballistic glazing material.

At the present time, commercial crack propagation and bullet-resisting plastic sheets include those formed from polymethyl methacrylate, polymethyl methacrylate copolymerized with less than about 2 weight percent ethyl acrylate, and laminates of polymethyl methacrylate and polycarbonate. These conventional materials have not, however, been found to be completely satisfactory in their ease or cost to manufacture, or in their ability to repeatedly pass the ballistic tests, especially the severe low temperature test. The inability to predict whether a certain material of a known composition will pass the certification test is a troublesome problem to plastic sheet manufacturers. This unpredictability is believed to be caused by such factors as small variances in the thickness of the sheet to be tested, variances in bullet velocity, variances in the temperature of the sample during testing, and the partially subjective nature of the spalling requirement, item 2, of the test itself as described above.

It is therefore an object of this invention to provide acrylic copolymers having improved crack propagation resistance.

It is also an object of the invention to provide crack propagation resistant materials which are easily prepared by conventional techniques and which are of low cost.

It is a further object of this invention to provide acrylic copolymers which meet the requirements of a ballistic glazing material.

Acrylic materials comprising copolymer containing a major amount for example 76 to 94 weight percent of methyl methacrylate units and a minor amount of lower alkyl ($C_2$—$C_4$) methacrylate units for example 12 to 24 weight percent of ethyl methacrylate or 6 to 14 weight percent of butyl methacrylate units have been found to be effective crack propagation resistant materials. Certain of these acrylic materials have been unexpectedly found to meet the requirements for certain ballistic glazing applications.

Furthermore, acrylic materials containing about 24 weight percent of ethyl methacrylate units and about 76 weight percent of methyl methacrylate units or about 12 weight percent of butyl methacrylate units and about 88 weight percent of methyl methacrylate units have been found to be effective for use in both indoor and outdoor ballistic glazing applications.

2

In order to determine if an improved acrylic material having high crack propagation resistance under ballistic testing conditions as compared to conventional polymethyl methacrylate could be obtained, we prepared a number of polymethyl methacrylate and polymethyl methacrylate copolymer sheets containing various types and amounts of acrylic comonomers. These comonomers were selected because of their low glass transition (Tg) temperature. The incorporation of lower Tg comonomers with polymethyl methacrylate was hypothesized to lead to softer polymethyl methacrylate sheet having decreased modulus properties, improved deflection under ballistic impact, and increased crack propagation resistance. The comonomers selected for the experiment included ethyl acrylate, butyl acrylate, 2-ethylhexylacrylate, lower alkyl ($C_2$—$C_4$) methacrylates and higher alkyl ($C_{12}$—$C_{18}$) methacrylates.

The acrylic materials of this invention may be prepared by any conventional copolymerization technique, such as sheet casting, injection molding, melt calendaring, etc. The samples prepared for testing were sheets having an average thickness of about 3.175 cm (1.250 inches). The range of thicknesses for individual samples, as illustrated by the examples which follow, ranged from 3.028 to 3.332 cm (1.193 to 1.311 inches).

The preferred method used to prepare the samples for testing was a standard sheet casing technique utilizing the following steps. A monomer mixture was prepared. This mixture contained methyl methacrylate and the comonomer, if any, as well as very small quantities of typical additives, including ultraviolet light absorbers, dirt suppressants, polymerization moderators, mold release or parting agents, toners, and catalysts. The aggregate concentration of the additives used was minor and typically less than one percent of the monomer mixture. The monomer mixture was agitated and poured into a standard cell casting mold. The mold was then placed in an oven at elevated temperature and pressure until copolymerization was complete. The mold was then cooled and the pressure was reduced. The mold was then removed from the oven, disassembled, and the polymerized cast sheet was removed.

The cast sheets were then cut to test sample size, of approximately 0.09 m² (one foot square), finished so that no imperfections, such as air bubbles and the like, were visible, and transferred to an independent ballistic testing laboratory, H. P. White Laboratory, Inc., Street, Maryland, for ballistic tests. This laboratory tested each sample in compliance with the UL—752 (MPSA) or (HPSA) test procedure. A super 38 caliber automatic (STAR®) weapon having a barrel length of 12.7 cm (5 inches) was used for the MPSA tests. The ammunition was 130 grain FMJ (full metal jacket) both factory-loaded and hand-loaded. The muzzle velocity of the bullet was determined for each firing and averaged for each sample tested. The average bullet velocity of most sample firings was about 390 ± 6.4 m/s (1280 ft./sec ± 21 ft./sec.) in accordance with UL—752 (MPSA). A .357 Magnum revolver (Smith and Wesson (trademark) Model 27) having a barrel length of 20.96 cm (8¼ inches) was used for the HPSA tests. The ammunition was 158 grain SP (soft point-no jacket) factory-loaded. The muzzle velocity of the .357 Magnum bullets averaged 418 ± 8.8 m/s (1,372 ft./sec. ± 29 ft./sec) in accordance with UL—752 (HPSA). All samples were temperature conditioned according to UL—752 (MPSA).

The response of the sample to each bullet fired was examined to determine if it passed the three requirements of the UL test, and the cracks formed were visibly recorded and categorized as surface mark only, cone fracture, linear crack, star crack, hole, light spall, or heavy spall for each shot fired. Six samples of each composition were tested and each sample was fired upon three times in a triangular pattern, as required in UL—752. Therefore, each sheet cast composition prepared was tested eighteen times at each temperature. The percentage of the samples which cracked and which passed the UL—752 certification test was determined on a per bullet (18 total) basis.

The average data for UL—752 (MPSA) tests for 32 sets of 6 samples each are presented in Table I. The Table illustrates that polymethyl methacrylate containing no comonomer (Examples 1 and 2) cracked 100% of the time and passed the UL test only 78 to 72% of the time at either temperature. This performance was confirmed with commercial Polycast (trademark). Sheet manufactured by Polycast, Inc. (Examples 3 and 4). The polymethyl methacrylate sheets, therefore, due to their high percentage crack cannot be relied upon to pass the certification procedure more than about three quarters of the time. Samples prepared with 1.75 weight percent ethyl acrylate, (Examples 5 and 6) performed about the same as the polymethyl methacrylate samples. The butyl acrylate/methyl methacrylate samples (Examples 7 and 8—10) prepared from 9 and 12 weight percent butyl acrylate, respectively, did not pass the room temperature or low temperature ballistic test, respectively. Samples prepared with 12 weight percent 2-ethylhexyl acrylate comonomer also did not pass the low temperature ballistic test.

Examples 13—32 present the results of the ballistic tests on samples of lower alkyl ($C_2$—$C_4$) and higher alkyl ($C_{12}$—$C_{18}$) methacrylate/methyl methacrylate copolymer sheets. Since lower alkyl acrylates have lower glass transition temperatures than the corresponding lower alkyl methacrylates, it was thought that the methyl methacrylate/lower alkyl methacrylate copolymer samples would exhibit less deflection, impact absorption, and crack resistance than corresponding copolymers formed from equal concentrations of lower alkyl acrylate comonomers. This result was unexpectedly not confirmed by the ballistic tests.

A copolymer prepared from 88 weight percent methyl methacrylate and 12 weight percent ethyl methacrylate (Example 13) showed a zero (0%) percentage crack and passed the ballistic test 100% of the time at ambient temperature. The ambient temperature test was repeated with samples of methyl methacrylate copolymerized with 14 weight percent (Example 15) and 24 weight percent (Example 17) ethyl methacrylate. The 14 weight percent sample (Example 15) resulted in a 0% crack and a 100% pass rate, while the 24 weight percent sample (Example 17) resulted in a 0% crack and 100% pass rate.

These three methyl methacrylate/ethyl methacrylate copolymers were also tested at low temperature −31.6°C (minus 25°F). The 12% and 14% ethyl methacrylate samples (Examples 14 and 16) did not pass this ballistic test 100% of the time, however, the 24% ethyl methacrylate sample (Example 18) did pass the low temperature ballistic test 100 percent of the time.

Copolymers prepared from 94% methyl methacrylate and 6% butyl methacrylate (Example 19) showed intermediate (56%) percentage crack and passed the test 94% of the time at ambient temperature. The test was repeated at ambient temperature on samples of methyl methacrylate copolymerized with 8 weight percent (Example 20), 10 weight percent (Example 23), 12 weight percent (Example 25), and 14 weight percent (Example 27) butyl methacrylate. The 8 weight percent samples (Example 20) and the 12 weight percent (Example 25) exhibited no percentage crack and a 100% pass rate, while the 10 weight percent (Example 23) and 14 weight percent (Example 27) samples showed low percentage crack (11 and 6%, respectively) and also 100% pass rates.

The 10 weight percent (Examples 22 and 24), 12 weight percent (Example 26), and 14 weight percent (Example 28) samples were also tested at low temperature (minus 25°F). While the 10 weight percent samples showed a higher crack rate (61%), only 1 sample out of 36 shots fired failed the test (94% pass, Example 24). The 14 weight percent samples (Example 28) also showed a higher percentage crack (83%), but all samples passed the test.

The preferred 12 weight percent samples (Example 26) exhibited the lowest percent crack at low temperature and passed the test 100% of the time. The physical properties of the 12 weight percent butyl methacrylate/88 weight percent methyl methacrylate copolymer cast sheet are illustrated in Table II.

Copolymers prepared from higher alkyl methacrylates such as dodecyl methacrylate (Examples 29 and 30) and octadecyl methacrylate (Examples 31 and 32) were also prepared and tested. The sheets had an unacceptable yellow color, were difficult to prepare and did not pass the ballistic tests 100% of the time at either the ambient or low temperature conditions even at reduced bullet velocities 358 m/s (approximately 1,175 ft./sec.).

We have also found that coating the preferred acrylic sheet, prepared from 12 weight percent butyl methacrylate and 88 weight percent methyl methacrylate, with abrasion resistant coatings conventionally used with methyl methacrylate sheets did not impair the ballistics performance of the acrylic sheets of the invention at ambient or low temperature conditions.

The average data for UL—752 (HPSA) tests for 3 sets of 6 samples each are presented in Table III. The table illustrates that a copolymer prepared from 88 weight percent methyl methacrylate and 12 weight percent butyl methacrylate (Example 33) showed a 6% crack and passed the ballistic test 100% of the time at 12.7°C (55°F). This 100% passing performance was replicated (Examples 34 and 35) although percent cracking was somewhat higher (11% and 72%, respectively).

Other comonomers such as ethyl methacrylate, dodecyl methacrylate, and octadecyl methacrylate did not pass the UL—752 HPSA test 100% of the time and percent crack was 100% in each case (Example 36—38).

Therefore, we have found that acrylic materials according to the invention are more highly crack propagation resistant than polymethyl methacrylate and are suitable for indoor ballistic glazing applications. Acrylic sheets prepared by copolymerizing about 12 weight percent butyl methacrylate and about 88 weight percent methyl methacrylate and from about 24 weight percent ethyl methacrylate and 76 weight percent methyl methacrylate have extremely high crack propagation resistance and are acceptable for both indoor and outdoor ballistic glazing applications. It is believed that the preferred copolymer sheets prepared from minor amounts of lower alkyl ($C_2$—$C_4$) methacrylate and major amounts of methyl methacrylate having thicknesses greater than 3.175 cm (1.250 inches) would also exhibit the same crack propagation resistance exhibited by the 3.175 cm (1.250 inch) thick samples tested.

TABLE 1

UL—752 Performance Data on 3.175 cm (1.250) Inch Cast Sheet

| Example | Cast Sheet Composition | | | Test Temp. | | Thickness of Sheet at Impact | | Avg. Bullet Velocity | | % Crack | % Pass |
| | MMA[1] Wt. % | Comonomer Type | Wt. % | °C | (°F) | (Inches) | CM | (ft./sec.) | M/Sec | | |
|---|---|---|---|---|---|---|---|---|---|---|---|
| 1 | 100 | None | — | 18.3 | (65) | (1.193) | 3.03 | (1247) | 380 | 100 | 78 |
| 2 | 100 | None | — | -31.6 | (-25) | (1.248) | 3.17 | (1267) | 386 | 100 | 72 |
| *3 | 100 | None | — | 12.8 | (55) | (1.233) | 3.13 | (1279) | 390 | 100 | 72 |
| *4 | 100 | None | — | -31.6 | (-25) | (1.251) | 3.18 | (1270) | 387 | 100 | 72 |
| 5 | 98.25 | EA[2] | 1.75 | 12.8 | (55) | (1.267) | 3.22 | (1295) | 395 | 100 | 44 |
| 6 | 98.25 | EA | 1.75 | -31.6 | (-25) | (1.291) | 3.28 | (1280) | 390 | 100 | 61 |
| 7 | 91.0 | BA[3] | 9.0 | 12.8 | (55) | (1.264) | 3.21 | (1278) | 390 | 100 | 0 |
| 8 | 88.0 | BA | 12.0 | 12.8 | (55) | (1.252) | 3.18 | (1280) | 390 | 100 | 44 |
| 9 | 88.0 | BA | 12.0 | 12.8 | (55) | (1.299) | 3.30 | (1283) | 391 | 100 | 50 |
| 10 | 88.0 | BA | 12.0 | -31.6 | (-25) | (1.311) | 3.33 | (1282) | 391 | 100 | 0 |
| 11 | 88.0 | 2-EHA[4] | 12.0 | 12.8 | (55) | (1.271) | 3.23 | (1279) | 390 | 100 | 78 |
| 12 | 88.0 | 2-EHA | 12.0 | -31.6 | (-25) | (1.295) | 3.29 | (1278) | 390 | 100 | 0 |
| 13 | 88 | EMA[5] | 12 | 12.8 | (55) | (1.275) | 3.24 | (1290) | 393 | 0 | 100 |
| 14 | 88 | EMA | 12 | -31.6 | (-25) | (1.265) | 3.21 | (1298) | 396 | 100 | 67 |
| 15 | 86 | EMA | 14 | 23.8 | (75) | (1.212) | 3.08 | (1176) | 358 | 0 | 100 |
| 16 | 86 | EMA | 14 | -31.6 | (-25) | (1.253) | 3.18 | (1178) | 359 | 100 | 83 |
| 17 | 76 | EMA | 24 | 23.8 | (75) | (1.205) | 3.06 | (1173) | 357 | 0 | 100 |
| 18 | 76 | EMA | 24 | -31.6 | (-25) | (1.251) | 3.18 | (1176) | 358 | 56 | 100 |
| 19 | 94.0 | BMA[6] | 6.0 | 18.3 | (65) | (1.242) | 3.15 | (1273) | 388 | 56 | 94 |
| 20 | 92.0 | BMA | 8.0 | 18.3 | (65) | (1.248) | 3.17 | (1262) | 385 | 0 | 100 |
| 21 | 90.0 | BMA | 10.0 | 12.7 | (55) | (1.263) | 3.21 | (1293) | 394 | 44 | 100 |
| 22 | 90.0 | BMA | 10.0 | -31.6 | (-25) | (1.267) | 3.22 | (1279) | 390 | 61 | 100 |
| 23 | 90.0 | BMA | 10.0 | 12.7 | (55) | (1.289) | 3.27 | (1293) | 394 | 11 | 100 |
| 24 | 90.0 | BMA | 10.0 | -31.6 | (-25) | (1.279) | 3.25 | (1289) | 393 | 61 | 94 |
| 25 | 88.0 | BMA | 12.0 | 18.3 | (65) | (1.254) | 3.19 | (1262) | 385 | 0 | 100 |
| 26 | 88.0 | BMA | 12.0 | -31.6 | (-25) | (1.302) | 3.31 | (1280) | 390 | 33 | 100 |
| 27 | 86.0 | BMA | 14.0 | 18.3 | (65) | (1.268) | 3.22 | (1265) | 386 | 6 | 100 |
| 28 | 86.0 | BMA | 14.0 | -31.6 | (-25) | (1.294) | 3.29 | (1264) | 386 | 83 | 100 |
| 29 | 91 | DDMA[7] | 9 | 23.8 | (75) | (1.255) | 3.19 | (1170) | 357 | 83 | 83 |
| 30 | 91 | DDMA | 9 | -31.6 | (-25) | (1.256) | 3.19 | (1175) | 358 | 100 | 17 |
| 31 | 90 | ODMA[8] | 10 | 23.8 | (75) | (1.257) | 3.19 | (1179) | 359 | 100 | 78 |
| 32 | 90 | ODMA | 10 | -31.6 | (-25) | (1.257) | 3.19 | (1184) | 361 | 100 | 0 |

0 120 680

[1]MMA = methyl methacrylate

[2]EA = ethyl acrylate

[3]BA = butyl acrylate

[4]2-EHA = 2-ethylhexyl acrylate

[5]EMA = ethyl methacrylate

[6]BMA = butyl methacrylate

[7]DDMA = dodecyl methacrylate

[8]ODMA = octadecyl methacrylate

* Polycast (trademark) Sheet

**0 120 680**

TABLE II

Physical Properties of Butyl Methacrylate (12 wt. %) /Methyl Methacrylate
(88 wt. %) Copolymer Cast Sheet

| Test | Property | Units | Value |
|---|---|---|---|
| Flexural Strength[1] | Flexural Stress at Max. | kg /m² (psi) | $1.08 \times 10^7$ (15,300) |
| Flexural Strength[1] | Flexural Stress at Break | kg /m² (psi) | $1.06 \times 10^7$ (15,100) |
| Flexural Strength[1] | Modulus of Elasticity | kg/m² (psi) | $2.98 \times 10^8$ (424,000) |
| Tensile Strength[2] | Tensile Stress at Max. | kg /m² (psi) | $7.1 \times 10^6$ (10,100) |
| Tensile Strength[2] | Tensile Stress at Break | kg /m² (psi) | $7.1 \times 10^6$ (10,100) |
| Tensile Strength[2] | Elongation at Break | Percent | 4.6 |
| Tensile Strength[2] | Modulus Elasticity | kg /m² (psi) | $2.79 \times 10^8$ (397,000) |
| Deflection Temp. under Flexural Load[3] | Temperature at $2.54 \times 10^{-4}$m (10 Mil) Deflection | (°F) (°C) | (205) 96 |
| Rockwell Hardness[4] | Hardness | M scale | 97 |
| Barcol Number | Hardness | — | 46 |
| Transmittance[5] | Transmittance | Percent | 91 |
| Haze[6] | Haze | Percent | 0.4 |

[1]ASTM D–790–66

[2]ASTM D–638–77

[3]ASTM D–648–72 at (264 psi)

[4]ASTM D–785–65 $1.85 \times 10^5$ kg /m²

[5]ASTM D–1003

6ASTM D–1003

7

TABLE III

UL−752 (HPSA) Ballistic Performace Data on 3.175 cm "1.250" Inch Cast Sheet

Cast Sheet Composition

| Example | MMA[1] Wt.% | Comonomer Type | Wt.% | Test Temp. °C | (°F) | Thickness of Sheet at Impact (Inches) | CM | Avg. Bullet Velocity (ft./sec.) | M/Sec | % Crack | % Pass |
|---------|-------------|----------------|------|---------------|------|---------------------------------------|------|---------------------------------|-------|---------|--------|
| 33 | 88 | BMA[1] | 12 | 12.8 | (55) | (1.309) | 3.32 | (1374) | 419 | 6 | 100 |
| 34 | 88 | BMA | 12 | 12.8 | (55) | (1.285) | 3.26 | (1361) | 414 | 11 | 100 |
| 35 | 88 | BMA | 12 | 23.8 | (75) | (1.307) | 3.32 | (1402) | 427 | 72 | 100 |
| 36 | 86 | EMA[2] | 14 | 23.8 | (75) | (1.248) | 3.17 | (1358) | 414 | 100 | 78 |
| 37 | 91 | DDMA[3] | 9 | 23.8 | (75) | (1.271) | 3.23 | (1343) | 409 | 100 | 6 |
| 38 | 90 | ODMA[4] | 10 | 23.8 | (75) | (1.304) | 3.31 | (1370) | 418 | 100 | 0 |

[1]BMA = butyl methacrylate

[2]EMA = ethyl methacrylate

[3]DDMA = dodecyl methacrylate

[4]ODMA = octadecyl methacrylate

# 0 120 680

**Claims for the Contracting States: BE CH DE FR GB IT LI LU NL SE**

1. A crack propagation resistant acrylic material comprising copolymer containing 76 to 94 weight percent of methyl methacrylate units and 24 to 6 weight percent of $(C_2-C_4)$ alkyl methacrylate units, provided that when the alkyl methacrylate comprises ethyl methacrylate, the copolymer contains at least 12 weight percent of ethyl methacrylate units.

2. Acrylic material as claimed in claim 1 wherein the copolymer contains 86 to 94 weight percent of methyl methacrylate units and 14 to 6 weight percent of butyl methacrylate units.

3. Acrylic material as claimed in claim 2 wherein the copolymer contains 86 to 90 weight percent of methyl methacrylate units and 14 to 10 weight percent of butyl methacrylate.

4. Acrylic material as claimed in claim 3 wherein the copolymer contains about 88 weight percent of methyl methacrylate units and about 12 weight percent of butyl methacrylate units.

5. Acrylic material as claimed in claim 1 wherein the copolymer contains 76 to 88 weight percent of methyl methacrylate units and 24 to 12 weight percent of ethyl methacrylate units.

6. Acrylic material as claimed in claim 5 wherein the copolymer contains about 76 weight percent of methyl methacrylate units and about 24 weight percent of ethyl methacrylate units.

7. Acrylic material as claimed in any preceding claim being in sheet form.

8. Acrylic material as claimed in any preceding claim in the form of ballistic glazing material.

9. Acrylic material as claimed in claim 7 or 8 having an average thickness of at least 3.175 cm (1.250 inches).

10. Acrylic material as claimed in any one of claims 7 to 9 made by sheet casing.

**Claims for the Contracting State: AT**

1. A method of making crack propagation resistant acrylic material by copolymerising methyl methacrylate and $(C_2-C_4)$-alkyl methacrylate to form copolymer containing 76 to 94 weight percent of methyl methacrylate units and 24 to 6 weight percent of $(C_2-C_4)$-alkyl methacrylate units provided that when the alkyl methacrylate comprises ethyl methacrylate, the copolymer contains at least 12 weight percent of ethyl methacrylate units.

2. Method as claimed in claim 1 wherein the copolymer contains 86 to 94 weight percent of methyl methacrylate units and 14 to 6 weight percent of butyl methacrylate units.

3. Method as claimed in claim 2 wherein the copolymer contains 86 to 90 weight percent of methyl methacrylate units and 14 to 10 weight percent of butyl methacrylate units.

4. Method as claimed in claim 3 wherein the copolymer contains about 88 weight percent of methyl methacrylate units and about 12 weight percent of butyl methacrylate units.

5. Method as claimed in claim 1 wherein the copolymer contains 76 to 88 weight percent of methyl methacrylate units and 24 to 12 weight percent of ethyl methacrylate units.

6. Method as claimed in claim 5 wherein the copolymer contains about 76 weight percent of methyl methacrylate units and about 24 weight percent of ethyl methacrylate units.

7. Method as claimed in any preceding claim wherein the acrylic material is produced in sheet form.

8. Method as claimed in any preceding claim wherein the acrylic material is produced in the form of ballistic glazing material.

9. Method as claimed in claim 8 or 9 wherein the acrylic material has an average thickness of at least 3.175 cm (1.250 inches).

10. Method as claimed in any one of claims 7 to 9 wherein the acrylic material is made of sheet casting.

11. Acrylic material comprising copolymer as defined in any one of claims 1 to 6 in sheet form, for example ballistic glazing material preferably having an average thickness of at least 3.175 cm (1.250 inches).

**Patentansprüche für die Vertragsstaaten: BE CH DE FR GB IT LI LU NL SE**

1. Acrylmaterial mit Widerstandsfähigkeit gegenüber einer Rißausbreitung aus einem Copolymeren, das 76 bis 94 Gew.-% Methylmethacrylateinheiten und 24 bis 6 Gew.-% $(C_2-C_4)$-Alkylmethacrylateinheiten enthält, unter der Voraussetzung, daß dann, wenn das Alkylmethacrylat aus Ethylmethacrylat besteht, das Copolymere wenigstens 12 Gew.-% Ethylmethacrylateinheiten enthält.

2. Acrylmaterial nach Anspruch 1, wobei das Copolymere 86 bis 94 Gew.-% Methylmethacrylateinheiten und 14 bis 6 Gew.-% Butylmethacrylateinheiten enthält.

3. Acrylmaterial nach Anspruch 2, wobei das Copolymere 86 bis 90 Gew.-% Methylmethacrylateinheiten und 14 bis 6 Gew.-% Butylmethacrylateinheiten enthält.

4. Acrylmaterial nach Anspruch 3, wobei das Copolymere ungefähr 88 Gew.-% Methylmethacrylateinheiten und ungefähr 12 Gew.-% Butylmethacrylateinheiten enthält.

5. Acrylmaterial nach Anspruch 1, wobei das Copolymere 76 bis 88 Gew.-% Methylmethacrylateinheiten und 24 bis 12 Gew.-% Ethylmethacrylateinheiten enthält.

6. Acrylmaterial nach Anspruch 5, wobei das Copolymere ungefähr 76 Gew.-% Methylmethacrylateinheiten und ungefähr 24 Gew.-% Ethylmethacrylateinheiten enthält.

9

7. Acrylmaterial nach einem der vorhergehenden Ansprüche in Folienform.

8. Acrylmaterial nach einem der vorhergehenden Ansprüche in Form eines ballistischen Verglasungsmaterials.

9. Acrylmaterial nach Anspruch 7 oder 8 mit einer durchschnittlichen Dicke von wenigstens 3,175 cm (1,250 inches).

10. Acrylmaterial nach einem der Ansprüche 7 bis 9, hergestellt durch Foliengießen.

**Patentansprüche für den Vertragsstaat: AT**

1. Verfahren zur Herstellung eines Acrylmaterials mit einer Widerstandsfähigkeit gegenüber einer Rißausbreitung durch Copolymerisation von Methylmethacrylat und $(C_2—C_4)$Alkylmethacrylat unter Bildung eines Copolymeren, enthaltend 76 bis 94 Gew.-% Methylmethacrylateinheiten und 24 bis 6 Gew.-% $(C_2—C_4)$Alkylmethacrylateinheiten, vorausgesetzt daß dann, wenn das Alkylmethacrylat aus Ethylmethacrylat besteht, das Copolymere wenigstens 12 Gew.-% Ethylmethacrylateinheiten enthält.

2. Verfahren nach Anspruch 1, wobei das Copolymere 86 bis 94 Gew.-% Methylmethacrylateinheiten und 14 bis 6 Gew.-% Butylmethacrylateinheiten enthält.

3. Verfahren nach Anspruch 2, wobei das Copolymere 86 bis 90 Gew.-% Methylmethacrylateinheiten und 14 bis 10 Gew.-% Butylmethacrylateinheiten enthält.

4. Verfahren nach Anspruch 3, wobei das Copolymere ungefähr 88 Gew.-% Methylmethacrylateinheiten und ungefähr 12 Gew.-% Butylmethacrylateinheiten enthält.

5. Verfahren nach Anspruch 1, wobei das Copolymere 76 bis 88 Gew.-% Methylmethacrylateinheiten und 24 bis 12 Gew.-% Ethylmethacrylateinheiten enthält.

6. Verfahren nach Anspruch 5, wobei das Copolymere ungefähr 76 Gew.-% Methylmethacrylateinheiten und ungefähr 24 Gew.-% Ethylmethacrylateinheiten enthält.

7. Verfahren nach einem der vorhergehenden Ansprüche, wobei das Acrylmaterial in Folienform erzeugt wird.

8. Verfahren nach einem der vorhergehenden Ansprüche, wobei das Acrylmaterial in Form eines ballistischen Verglasungsmaterials erzeugt wird.

9. Verfahren nach Anspruch 8 oder 9, wobei das Acrylmaterial eine durchschnittliche Dicke von wenigstens 3,175 cm (1,250 inches) besitzt.

10. Verfahren nach einem der Ansprüche 7 bis 9, wobei das Acrylmaterial durch Foliengießen erzeugt wird.

11. Acrylmaterial aus einem Copolymeren gemäß einem der Ansprüche 1 bis 6 in Folienform, beispielsweise einem ballistischen Verglasungsmaterial, das vorzugsweise eine durchschnittliche Dicke von wenigstens 3,175 cm (1,259 inches) besitzt.

**Revendications pour les Etats contractants: BE CH DE FR GB IT LI LU NL SE**

1. Un matériau acrylique résistant à la propagation des craquelures comprenant un copolymère contenant 76 à 94% en poids de motifs de méthacrylate de méthyle et 24 à 6% en poids de motifs de méthacrylate d'alcoyle $(C_2—C_4)$, sous réserve que lorsque le méthacrylate d'alcoyle comprend le méthacrylate d'éthyle, le copolymère contient au moins 12% en poids de motifs de méthacrylate d'éthyle.

2. Matériau acrylique comme revendiqué dans la revendication 1 dans lequel le copolymère contient 86 à 94% en poids de motifs de méthacrylate de méthyle et 14 à 6% en poids de motifs de méthacrylate de butyle.

3. Matériau acrylique comme revendiqué dans la revendication 2 dans lequel le copolymère contient 86 à 90% en poids de motifs de méthacrylate de méthyle et 14 à 10% en poids de méthacrylate de butyle.

4. Matériau acrylique comme revendiqué dans la revendication 3 dans lequel le copolymère contient environ 88% en poids de motifs de méthacrylate de méthyle et environ 12% en poids de motifs de méthacrylate de butyle.

5. Matériau acrylique comme revendiqué dans la revendication 1 dans lequel le copolymère contient 76 à 88% en poids de motifs de méthacrylate de méthyle et 24 à 12% en poids de méthacrylate de méthyle et 24 à 12% en poids de méthacrylate d'éthyle.

6. Matériau acrylique comme revendiqué dans la revendication 5 dans lequel le copolymère contient environ 76% en poids de motifs de méthacrylate de méthyle et environ 24% en poids de motifs de méthacrylate d'éthyle.

7. Matériau acrylique comme revendiqué dans l'une quelconque des revendications précédentes étant sous forme d'une feuille.

8. Matériau acrylique comme revendiqué dans l'une quelconque des revendications précédentes sous forme d'un matériau de vitrage balistique.

9. Matériau acrylique comme revendiqué dans la revendication 7 ou 8 ayant une épaisseur moyenne d'au moins 3,175 cm (1,250 inch).

10. Matériau acrylique comme revendiqué dans l'une quelconque des revendications 7 à 9 fait par coulée en feuille.

**Revendications pour l'Etat contractant: AT**

1. Un procédé de préparation d'un matériau acrylique résistant à la propagation des craquelures par copolymérisation de méthacrylate de méthyle et d'un méthacrylate d'alcoyle ($C_2$—$C_4$) pour former un copolymère contenant 76 à 94% en poids de motifs de méthacrylate de méthyle et 24 à 6% en poids de motifs de méthacrylate d'alcoyle ($C_2$—$C_4$), sous réserve que lorsque le méthacrylate d'alcoyle comprend du méthacrylate d'éthyle, le copolymère contient au moins 12% en poids de motifs de méthacrylate d'éthyle.

2. Procédé comme revendiqué dans la revendication 1, dans lequel le copolymère contient 86 à 94% en poids de motifs de méthacrylate de méthyle et 14 à 6% en poids de motifs de méthacrylate de butyle.

3. Procédé comme revendiqué dans la revendication 2, dans lequel le copolymère contient 86 à 90% en poids de motifs de méthacrylate de méthyle et 14 à 10% en poids de motifs de méthacrylate de butyle.

4. Procédé comme revendiqué dans la revendication 3, dans lequel le copolymère contient environ 88% en poids de motifs de méthacrylate de méthyle et environ 12% en poids de motifs de méthacrylate de butyle.

5. Procédé comme revendiqué dans la revendication 1, dans lequel le copolymère contient 76 à 88% en poids de motifs de méthacrylate de méthyle et 24 à 12% en poids de motifs de méthacrylate d'éthyle.

6. Procédé comme revendiqué dans la revendication 5, dans lequel le copolymère contient environ 76% en poids de motifs de méthacrylate de méthyle et environ 24% en poids de motifs de méthacrylate d'éthyle.

7. Procédé comme revendiqué dans l'une quelconque des revendications précédentes, dans lequel le matériau acrylique est produit sous forme d'une feuille.

8. Procédé comme revendiqué dans l'une quelconque des revendications précédentes, dans lequel le matériau acrylique est produit sous forme d'un matériau de vitrage balistique.

9. Procédé comme revendiqué dans la revendication 7 ou 8, dans lequel le matériau acrylique a une épaisseur moyenne d'au moins 3,175 cm (1,250 inch).

10. Procédé comme revendiqué dans l'une quelconque des revendications 7 à 9, dans lequel le matériau acrylique est fait par coulée en feuille.

11. Matériau acrylique comprenant un copolymère comme défini dans l'une quelconque des revendications 1 à 6 sous forme d'une feuille, par exemple un matériau de vitrage balistique ayant de préférence une épaisseur moyenne d'au moins 3,175 cm (1,250 inch).